# EUROPÄISCHE PATENTSCHRIFT

(11) **EP 3 717 289 B1**
(45) Veröffentlichungstag und Bekanntmachung des Hinweises auf die Patenterteilung: **28.12.2022**
(21) Anmeldenummer: 18804550.4
(22) Anmeldetag: 13.11.2018
(51) Int. Cl.: B60J 5/04

(54) **FAHRZEUGTÜR UND FAHRZEUG**
VEHICLE DOOR AND VEHICLE
PORTE DE VÉHICULE ET VÉHICULE

(30) Priorität: 29.11.2017 DE 102017128277
(43) Veröffentlichungstag der Anmeldung: 07.10.2020
(73) Patentinhaber: Kuhn, Herbert, 50169 Kerpen (Horrem) (DE)
(72) Erfinder: Kuhn, Herbert, 50169 Kerpen (Horrem) (DE)
(74) Vertreter: Brinkmann & Partner
(86) Internationale Anmeldenummer: PCT/EP2018/081092
(87) Internationale Veröffentlichungsnummer: WO 2019/105732

(56) Entgegenhaltungen:
- EP-A1- 1 193 089
- EP-B1- 1 193 089
- JP-U- S61 104 225
- KR-A- 20150 076 513
- US-A- 2 993 730
- US-A- 5 992 918

## Beschreibung

Die Erfindung betrifft eine Fahrzeugtür, insbesondere für Personenkraftwagen und/oder Lastkraftwagen. Ferner betrifft die Erfindung ein Fahrzeug mit einer erfindungsgemäßen Fahrzeugtür.

Fahrzeuge im Sinne der Erfindung sind mobile Verkehrsmittel, umfassend Landfahrzeuge, Wasserfahrzeuge und Luftfahrzeuge. Die Erfindung betrifft dabei insbesondere Untergruppen der Landfahrzeuge, wie etwa Straßenfahrzeuge, insbesondere Automobile aller Art. Automobile sind mehrspurige Kraftfahrzeuge, die zur Beförderung von Personen (Personenkraftwagen, PKW) oder Frachtgütern (Lastkraftwagen, LKW) dienen.

Fahrzeugtüren, insbesondere für PKWs und LKWs, sind aus dem Stand der Technik zur Genüge bekannt, so dass es eines gesonderten druckschriftlichen Nachweises an dieser Stelle nicht bedarf. Fahrzeugtüren verschließen im geschlossenen Zustand Öffnungen in der Karosserie von Fahrzeugen. Bei PKWs unterscheidet man je nach Öffnung beispielsweise zwischen Fahrertür und Beifahrertür. Eine Fahrzeugtür verfügt in der Regel über einen Türkörper, der den tragenden Teil der Fahrzeugtür bildet und gelenkig mit der Karosserie verbunden ist.

Wenngleich Fahrzeugtüren seit langem bekannt sind, ist deren Handhabung gleichwohl mit Nachteilen verbunden. Dies trifft insbesondere auf reguläre Fahrzeugtüren zu, die gelenkig mit der Karosserie des Fahrzeugs verbunden sind und um eine im Wesentlichen in Höhenrichtung verlaufende Schwenkachse zur Öffnung des Fahrzeugs nach Außen verschwenkt werden. Es besteht insbesondere bei regulären Fahrzeugtüren die Problematik, dass diese bei geringem Abstand zu Fremdobjekten nur zum Teil geöffnet werden können, da der Schwenkbereich der Fahrzeugtür blockiert ist. Beispielsweise können die Türen eines PKWs, der in einer Parkbucht neben anderen PKW parkt, in der Regel nicht vollständig geöffnet werden. Der Öffnungsbereich, der zum Aussteigen zur Verfügung steht ist also bei kleinem Schwenkweg vergleichsweise klein. Die Insassen müssen daher teils unbequeme Körperhaltungen einnehmen, um das Fahrzeug verlassen zu können. Ferner kommt es regelmäßig zu Lackschäden bei den beteiligten Fahrzeugen, da es beim Aussteigen nahezu unvermeidlich ist, dass sich Fahrzeugteile berühren.

Für körperlich eingeschränkte Personen ist das Aussteigen in einer solchen Situation besonders schwierig und/oder mit Schmerzen verbunden. Solche Personen müssen in der Regel bereits vor dem Parkvorgang das Auto verlassen. Oftmals geschieht dies situationsbedingt im Bereich der Fahrbahn, womit selbstverständlich zusätzliche Unfallrisiken verbunden sind.

Zur Vermeidung der vorgenannten Nachteile sind alternative Türkonzepte wie insbesondere Schiebetüren oder Scherentüren bekannt. Schiebetüren haben jedoch den Nachteil, dass sie einen vergleichsweise aufwändigen Führungsmechanismus erfordern, der überdies einen vergleichsweise großen Einbauraum erfordert.

Scherentüren haben den Nachteil, dass der Schwenkmechanismus im Vergleich zu regulären Fahrzeugtüren eine Vielzahl zusätzlicher Bauteile zur mechanischen Unterstützung und Stabilisierung der Tür im geöffneten Zustand erfordert. Mit entsprechend großem Aufwand sind Einbau, Wartung und Reparaturen solcher Türen verbunden. Darüber hinaus sind Scherentüren aufgrund der Tatsache, dass die Tür in Höhenrichtung verschwenkt, für höhere Autos, wie beispielsweise SUVs dem Grunde nach nicht geeignet. Die Deckenhöhe von Parkhäusern und Garagen ist hierfür in der Regel zu gering, so dass es zu Beschädigungen an der Tür kommen kann.

Eine zweiteilige Fahrzeugtür ist aus der Schrift JPS 61-104225 bekannt. Der untere Teil der Fahrzeugtür wird durch ein aufwändiges Stangengetriebe verschwenkt.

Die **Aufgabe** der Erfindung ist es daher eine vergleichsweise einfach konstruierte Fahrzeugtür bereitzustellen, die bei bestimmungsgemäßem Einsatz in einem Fahrzeug die vorgenannten Nachteile des Standes der Technik behebt.

Zur **Lösung** der Aufgabe schlägt die Erfindung eine Fahrzeugtür für ein Fahrzeug, insbesondere für Personenkraftwagen und/oder Lastkraftwagen, aufweisend einen Türkörper mit einer Außenwand und einer Innenwand, wobei der Türkörper mit der Karosserie des Fahrzeugs schwenkbeweglich verbindbar ist wobei die Außenwand ein erstes Außenwandelement und ein zweites Außenwandelement aufweist, welche schwenkbeweglich miteinander verbunden sind, wobei das erste Außenwandelement in Einbaulage oberhalb des zweiten Außenwandelements angeordnet ist, und aufweisend eine Schwenkeinrichtung, welche das erste Außenwandelement und das zweite Außenwandelement schwenkbeweglich miteinander verbindet, die sich dadurch auszeichnet, dass die Schwenkeinrichtung ein erstes Getriebeelement aufweist, welches als Kegelritzel ausgebildet ist und mit einem korrespondierenden zweiten Getriebeelement des Fahrzeugs welches als Kegelrad ausgebildet ist derart in Wirkverbindung bringbar ist, dass eine Verschwenkung des Türkörpers in Richtung der Außenseite der Fahrzeugtür relativ zur Karosserie eine Verschwenkung des zweiten Außenwandelements in Richtung der Außenseite der Fahrzeugtür relativ zum ersten Außenwandelement bewirkt.

Durch die erfindungsgemäße Ausgestaltung wird der Öffnungswinkel der Fahrzeugtür auch bei geringen Schwenkwegen im Bereich der Schwenkachse zwischen Fahrzeugtür und Karosserie gegenüber aus dem Stand der Technik bekannten regulären Fahrzeugtüren vergrößert. Hierdurch kann der Insasse das Fahrzeug durch den veränderten

Öffnungswinkel auch in engen Parklücken bequem verlassen. Der Erfinder hat zudem erkannt, dass beim Aussteigen aus einem Fahrzeug, insbesondere aus einem PKW zunächst wenigstens eine der unteren Extremitäten, also Bein und Fuß, durch die Türöffnung bewegt werden muss. Gerade die Füße befinden sich jedoch am nächsten an der Schwenkachse der Tür. In diesem vorderen Bereich der Tür bedarf es jedoch ungünstiger Weise eines vergleichsweise großen Schwenkweges, bevor sich die Tür auch in diesem Bereich weit genug öffnet. Sofern der Schwenkbereich der Tür durch ein Hindernis blockiert ist, ist der mögliche Schwenkweg jedoch im vorderen Bereich der Tür zu gering, als dass die Füße auf bequeme Art und Weise aus der Türöffnung geführt werden könnten. Vielmehr muss zunächst eine Körperdrehung durchgeführt werden, um die Füße durch einen hinteren Bereich der Türöffnung zur führen. Durch die erfindungsgemäße Lösung kann einerseits der Türkörper in üblicher Weise gegenüber der Fahrzeugkarosserie zur Öffnung der Tür verschwenkt werden. Zusätzlich zu dieser Schwenkbewegung kann überdies das zweite Außenwandelement gegenüber dem ersten Außenwandelement verschwenkt werden, wodurch der Öffnungswinkel im Bereich der Schwenkachse zwischen erstem und zweitem Außenwandelement gegenüber herkömmlichen Fahrzeugtüren bei gleichem Schwenkweg vergrößert wird. Hierdurch wird der Ausstieg aus dem Fahrzeug erleichtert, da insbesondere auf eine vorherige Körperdrehung verzichtet werden kann.

Erfindungsgemäß verfügt die Fahrzeugtür über einen Türkörper. Dieser bildet den tragenden Teil der Tür. Er ist vorzugsweise aus Metall, insbesondere aus Blech gebildet. Alternativ kann es insbesondere bei Fahrzeugtüren für Sportwagen vorgesehen sein, den Türkörper aus einem Kunststoff, insbesondere einem carbonfaserverstärkten Kunststoff (CFK) herzustellen. Der Türkörper weist eine Außenwand und eine Innenwand auf. Die Außenwand bildet bestimmungsgemäß einen Teil der Außenseite des Fahrzeugs. Vorzugsweise schließt sie im Wesentlichen bündig mit der Karosserie ab. Die Innenwand bildet die dem Innenraum des Fahrzeugs zugewandte Seite des Türkörpers. Innenwand und Außenwand können aus denselben Bauteilen gebildet sein. In diesem Fall ist das erste Außenwandelement einstückig mit einem ersten Innenwandelement gebildet und/oder das zweite Außenwandelement einstückig mit einem zweiten Innenwandelement. Alternativ sind die Außenwand und die Innenwand aus separaten Teilen, vorzugsweise aus Blechen und/oder entsprechenden Kunststoffteilen, gebildet und miteinander verbunden. Bevorzugt sind die Teile dabei verschweißt, vernietet und/oder verschraubt. Es ist bevorzugt, dass die Innenwand ein erstes Innenwandelement und zweites Innenwandelement aufweist, welche analog zu den Außenwandelementen schwenkbeweglich miteinander verbunden sind. Es sind dabei auch Kombinationen denkbar. Insbesondere können das erste Außenwandelement und das erste Innenwandelement aus separaten Teilen gebildet sein, während das zweite Außenwandelement und das zweite Innenwandelement einstückig ausgebildet sind.

Erfindungsgemäß ist der Türkörper mit der Karosserie des Fahrzeugs schwenkbeweglich verbindbar. Hierzu ist eine Gelenkeinrichtung vorgesehen. Teile der Gelenkvorrichtung sind dabei von dem ersten Außenwandelement und/oder dem ersten Innenwandelement bereitgestellt.

Die Fahrzeugtür weist vorzugsweise eine Türinnenverkleidung auf. Diese ist vorzugsweise an der Innenwand des Türkörpers angeordnet. Die Türinnenverkleidung dient der Bereitstellung von Ablagefächern, Bedienelementen und dergleichen. Vorzugsweise sind Abschnitte der Türinnenverkleidung auch an dem zweiten Außenwandelement und/oder dem zweiten Innenwandelement befestigt. Diese Abschnitte sind derart ausgebildet, dass sie mit dem zweiten Außenwandelement mitverschwenkbar sind.

Erfindungsgemäß ist das zweite Außenwandelement schwenkbeweglich mit dem ersten Außenwandelement verbunden. Vorzugsweise weist das zweite Außenwandelement einen im Wesentlichen viereckigen Umriss auf. Insbesondere die Ecken können dabei abgerundet sein. Vorzugsweise weist das zweite Außenwandelement dabei eine lange Kante und eine sich hieran anschließende kurze Kante auf. Vorzugsweise sind die lange und die kurze Kante winklig, insbesondere rechtwinklig zueinander angeordnet. Es ist dabei bevorzugt vorgesehen, dass die Schwenkachse zwischen erstem und zweitem Außenwandelement entlang der dem ersten Außenwandelement zugewandten langen Kante des zweiten Außenwandelements verläuft. Hierdurch ist erreicht, dass der Schwenkbereich des zweiten Außenwandelements vergleichsweise klein ist. Eine Verschwenkung des zweiten Außenwandelements ist dabei auch bei vergleichsweise nah an der Fahrzeugtür befindlichen Hindernissen möglich. Der Ausstieg aus dem Fahrzeug wird hierdurch weiter verbessert.

Die Schwenkachse kann gemäß einer ersten Ausgestaltung dabei in Einbaulage in Höhenrichtung verlaufen. Ferner kann die Schwenkachse in Einbaulage in Horizontalrichtung verlaufen. Unabhängig von der genauen Lage der Schwenkachse wird der Öffnungswinkel der Fahrzeugtür vergrößert. Eine in Höhenrichtung verlaufende Schwenkachse erbringt dabei den Vorteil, dass der Öffnungswinkel über die gesamte Höhe des schwenkbeweglichen Verbindungsbereichs der Außenwandelemente vergrößert wird. Hierdurch wird das Aussteigen zusätzlich dadurch erleichtert, dass wenigstens teilweise auch für den Rumpf eines Insassen zusätzlicher Platz geschaffen wird. Erstreckt sich der Verbindungsbereich zwischen den Außenwandelementen über die gesamte Höhe der Fahrzeugtür, ist es bevorzugt vorgesehen, eine von der Fahrzeugtür bereitgestellte Fensterscheibe zweiteilig auszubilden. Dabei ist es bevorzugt, dass die Fensterscheibenteile relativ zur Schwenkachse gegenüberliegend angeordnet sind. Eine in Horizontalrichtung verlaufende Schwenkachse ist demgegenüber konstruktiv einfacher zu realisieren. Auch eine Kombination von horizontaler und vertikaler Schwenkbewegung ist vorzugsweise möglich. Es ist dabei bevorzugt, dass die Schwenkachse teilweise in Horizontalrichtung und teilweise in Höhenrichtung verläuft. Eine solche Ausgestaltung ist hinsichtlich des resultierenden Benutzerkomforts und der konstruktiven Komplexität besonders vorteilhaft.

Gemäß einem bevorzugten Merkmal der Erfindung kann ein drittes Außenwandelement vorgesehen sein, welches ebenfalls mit dem ersten Außenwandelement schwenkbeweglich verbunden ist. In diesem bevorzugten Fall ist es vorgesehen, dass die Schwenkachse zwischen erstem und zweitem Außenwandelement entlang einer langen Kante des zweiten Außenwandelements in Horizontalrichtung verläuft. Die Schwenkachse zwischen erstem und drittem Außenwandelement verläuft in diesem Fall entlang einer langen Kante des dritten Außenwandelements in Höhenrichtung. Hierdurch kann die Vergrößerung des Öffnungswinkels der erfindungsgemäßen Fahrzeugtür gegenüber aus dem Stand der Technik bekannten Fahrzeugtüren noch weiter vergrößert werden und so ein Aussteigen aus dem Fahrzeug zusätzlich erleichtern. Auch wenn ein drittes Außenwandelement vorgesehen ist, ist für jede Schwenkachse eine Kombination aus horizontalem und vertikalem Verlauf bevorzugt.

Die Außenwand weist erfindungsgemäß zwei Elemente auf. Im Gegensatz zu bekannten Fahrzeugtüren, bei denen die Außenwand einteilig ausgebildet ist, erlaubt die erfindungsgemäße Ausgestaltung eine funktionale Verbindung zwischen den Außenwanaelementen. Gemäß der Erfindung ist das erste Außenwandelement in Einbaulage wenigstens teilweise oberhalb des zweiten Außenwandelements angeordnet. Hierdurch ist in vorteilhafter Weise sichergestellt, dass Öffnungswinkel der Schwenkachse im verschwenkten Zustand des zweiten Außenwandelements im unteren Teil der Tür verändert ist. Hierdurch können die unteren Extremitäten auch bei geringem Schwenkweg der Fahrzeugtür bequem aus dem Fahrzeug bewegt werden. Gemäß einer bevorzugten Ausgestaltung der Erfindung ist das zweite Außenwandelement in Form einer Klappe ausgebildet. Alternativ oder zusätzlich ist das erste Außenwandelement in Einbaulage wenigstens teilweise in Fahrzeugrichtung vor dem zweiten Außenwandelements angeordnet. Es kann ferner ein drittes Außenwandelement vorgesehen, welches in Einbaulage wenigstens teilweise in Fahrzeugrichtung hinter dem ersten Außenwandelement angeordnet ist. Hierdurch wird der Öffnungswinkel zusätzlich vergrößert.

Im unverschwenkten Zustand der Außenwandelemente verschließen diese den Zugang zum Innenraum des Fahrzeugs. Bei einer Verschwenkung des ersten und/oder des zweiten Außenwandelements öffnet sich die Fahrzeugtür. Das zweite Außenwandelement ist damit vorzugsweise aus einer Schließstellung heraus in Richtung der Außenseite der Fahrzeugtür bis hin zu einer vollständig geöffneten Stellung verschwenkbar. Alternativ kann es vorgesehen sein, dass das zweite Außenwandelement in Richtung des Innenraums des Fahrzeugs relativ zum ersten Außenwandelement verschwenkbar ist. Vorzugsweise verfügt die Fahrzeugtür über eine Schwenkeinrichtung, die das erste Außenwandelement und das zweite Außenwandelement schwenkbar miteinander verbindet. Vorzugsweise ist die Schwenkeinrichtung auch dazu geeignet, ein drittes Außenwandelement mit dem ersten Außenwandelement schwenkbeweglich zu verbinden. Die Schwenkeinrichtung kann im einfachsten Fall als Gelenk oder Scharnier ausgebildet sein. Es sind jedoch vorzugsweise weitere Ausgestaltungen vorgesehen, die vorteilhafte Funktionalitäten ermöglichen.

Gemäß einer ersten Ausführung kann das zweite Außenwandelement unabhängig von einer Verschwenkung des ersten Außenwandelements verschwenkt werden. Dies kann durch einfache Krafteinwirkung auf das zweite Außenwandelement geschehen. Beispielsweise, indem ein Insasse von Innen gegen das zweite Außenwandelement drückt. Ferner kann ein Betätigungsmechanismus, etwa in Form eines Hebels oder eines Knopfes vorgesehen sein, der mit der Schwenkeinrichtung steuerungstechnisch gekoppelt ist. Auch eine elektronische Steuerung ist möglich. Es ist vorzugsweise vorgesehen, dass das zweite Außenwandelement über lösbare Rastmittel verfügt, die im unverschwenkten Zustand mit korrespondierenden Rastmitteln der Fahrzeugkarosserie zusammenwirken. Hierdurch ist sichergestellt, dass das zweite Außenwandelement nicht unbeabsichtigt, insbesondere während der Fahrt geöffnet werden kann. Es ist vorgesehen, dass die Rastmittel über einen Betätigungsmechanismus gelöst und fixiert werden können. Alternativ kann die Schwenkeinrichtung über einen Sperrmechanismus verfügen, der bei bestimmten Fahrzeugzuständen eine Verschwenkbewegung des zweiten Außenwandelements blockiert. Insbesondere im Falle einer elektronischen Steuerung kann ein Öffnen oder Schließen des zweiten Außenwandelements in Abhängigkeit verschiedener Sensordaten erfolgen. Insbesondere geeignet ist z.B. die Motordrehzahl.

Gemäße der Erfindung ist die Schwenkbewegung des zweiten Außenwandelements mechanisch mit der Schwenkbewegung des Türkörpers relativ zur Karosserie gekoppelt. Diese Ausgestaltung ist zugleich konstruktiv einfach und benutzerfreundlich. Hierbei weist die Schwenkeinrichtung ein erstes Getriebeelement auf, welches bei bestimmungsgemäßem Einbau der Fahrzeugtür im Fahrzeug mit einem korrespondierenden zweiten Getriebeelement des Fahrzeugs zusammenwirkt. Der Türkörper ist vorzugsweise über eine Gelenkeinrichtung mit der Karosserie des Fahrzeugs gelenkig verbunden. Erfindungsgemäß ist die Karosserie über die Gelenkeinrichtung mit dem ersten Außenwandelement und/oder dem ersten Innenwandelement des Türkörpers schwenkbeweglich verbunden. Die Gelenkeinrichtung stellt erfindungsgemäß das zweite Getriebeelement bereit. Erstes und zweites Getriebeelement sind derart angeordnet, dass sie kraftschlüssig ineinandergreifen können. Das zweite Getriebeelement ist derart mit den übrigen Teilen der Gelenkeinrichtung verbunden, dass es bei einer Bewegung des ersten Außenwandelements ebenfalls in Bewegung, vorzugsweise Rotation, versetzt wird. Hierdurch treibt das zweite Getriebeelement das erste Getriebeelement an. Die Getriebeelemente stellen erfindungsgemäß jeweils gezahnte Bereiche bereit, die formschlüssig ineinander eingreifen. Bevorzugt sind Zahnräder, Zahnscheiben und dergleichen. Erfindungsgemäß bilden erstes und zweites Getriebeelement zusammen ein Kegelradgetriebe. Dabei ist das erste Getriebeelement erfindungsgemäß als Kegelritzel ausgebildet. Das zweite Getriebeelement ist erfindungsgemäß als Kegelrad ausgebildet.

Gemäß einer bevorzugten Ausgestaltung der Erfindung verfügt die Gelenkeinrichtung zum Antrieb des zweiten Getriebeelements vorzugsweise über eine erste Welle. Die erste Welle steht dabei vorzugsweise einerseits mit dem zweiten Getriebeelement und andererseits mit dem Türkörper, insbesondere dem ersten Außenwandelement und/oder dem ersten Innenwandelement, in Wirkverbindung. Die erste Welle ist vorzugsweise als Gelenkstift ausgebildet. Gemäß einer weiteren bevorzugten Ausgestaltung verfügt die Schwenkeinrichtung zur Verschwenkung des zweiten Außenwandelements über eine zweite Welle. Die zweite Welle ist vorzugsweise mit dem ersten Getriebeelement bewegungstechnisch gekoppelt. Die zweite Welle ist vorzugsweise als Hohlwelle ausgebildet. Vorzugsweise ist die Welle koaxial zur Schwenkachse des zweiten Außenwandelements angeordnet. Hierdurch wird das zweite Außenwandelement automatisch verschwenkt, wenn das erste Außenwandelement gegenüber der Karosserie verschwenkt wird. Einfach gesagt, klappt das zweite Außenwandelement beim Öffnen der Fahrzeugtür automatisch aus und verändert so den Öffnungswinkel im Bereich der Schwenkachse zwischen Türkörper und Karosserie.

Gemäß einer bevorzugten Ausgestaltung der Erfindung beträgt der maximale Öffnungswinkel des zweiten Außenwandelements zwischen 30° und 65°. Besonders bevorzugt ist ein maximaler Öffnungswinkel zwischen 40° und 50°, insbesondere 45°. Sofern ein erfindungsgemäßes Getriebe vorgesehen ist, welche die Schwenkbewegung des Türkörpers, vorzugsweise des ersten Außenwandelements und/oder des ersten Innenwandelements, relativ zur Karosserie mit der Schwenkbewegung des ersten Außenwandelements koppelt, ist es bevorzugt, dass der maximale Öffnungswinkel des zweiten Außenwandelements bereits bei einem nicht-maximalen Öffnungswinkel des Türkörpers erreicht ist. Hierdurch ist sichergestellt, dass das zweite Außenwandelement vollständig geöffnet wird, auch wenn sich im Schwenkbereich des Türkörpers ein Hindernis befinden sollte. Vorzugsweise ist das Getriebe derart eingestellt, dass der maximale Schwenkwinkel des zweiten Außenwandelements bereits bei einem Schwenkwinkel des ersten Außenwandelements von höchstens 45°, bevorzugt höchstens 30°, besonders bevorzugt 15° erreicht ist.

Gemäß einer bevorzugten Ausgestaltung der Erfindung weist das zweite Außenwandelement einen trapezförmigen Umriss auf. Die Basis des Trapezes (die längere Grundseite) ist dabei in Einbaulage der Fahrzeugtür im Frontbereich der Türöffnung angeordnet. Der in Einbaulage obere Schenkel des Trapezes ist dem ersten Außenwandelement zugewandt und stellt die lange Kante der des zweiten Außenwandelements dar. Die beiden Grundseiten bilden die kurzen Kanten.

Gemäß einer bevorzugten Ausführung der Erfindung ist die Fahrzeugtür als Kraftfahrzeugtür, insbesondere PKW-Tür oder LKW-Tür, ausgebildet. Erfindungsgemäße Fahrzeugtüren können dabei insbesondere als Fahrertüren, Beifahrertüren und/oder Fondtüren verwendet werden. Als Fondtüren bezeichnet man bei einem Kraftfahrzeug diejenigen Türen, die dem Teil der Fahrgastzelle des Kraftfahrzeugs zugeordnet sind, der die Rücksitze beherbergt. Hierdurch wird der Aus- und Einstieg in das Fahrzeug an sämtlichen Fahrzeugtüren des Fahrzeugs erleichtert.

Die Erfindung wird nachfolgend anhand eines Ausführungsbeispiels erläutert. Dabei zeigen
- Fig. 1: zeigt einen Vergleich zwischen einer aus dem Stand der Technik bekannten regulären PKW-Tür und zwei Ausführungsbeispielen gemäß der Erfindung in schematischer Ausschnittsansicht;
- Fig. 2: einen erfindungsgemäßen PKW mit geschlossener PKW-Tür in Seitenansicht;
- Fig. 3: einen erfindungsgemäßen PKW mit geöffneter PKW-Tür in Seitenansicht;
- Fig. 4: einen erfindungsgemäßen PKW mit geschlossener PKW-Tür in teiltransparenter Seitenansicht;
- Fig. 5: eine erfindungsgemäße PKW-Tür in Einbaulage mit Blick von unten in geschlossenem Zustand;
- Fig. 6: eine erfindungsgemäße PKW-Tür in Einbaulage mit Blick von unten in geöffnetem Zustand.

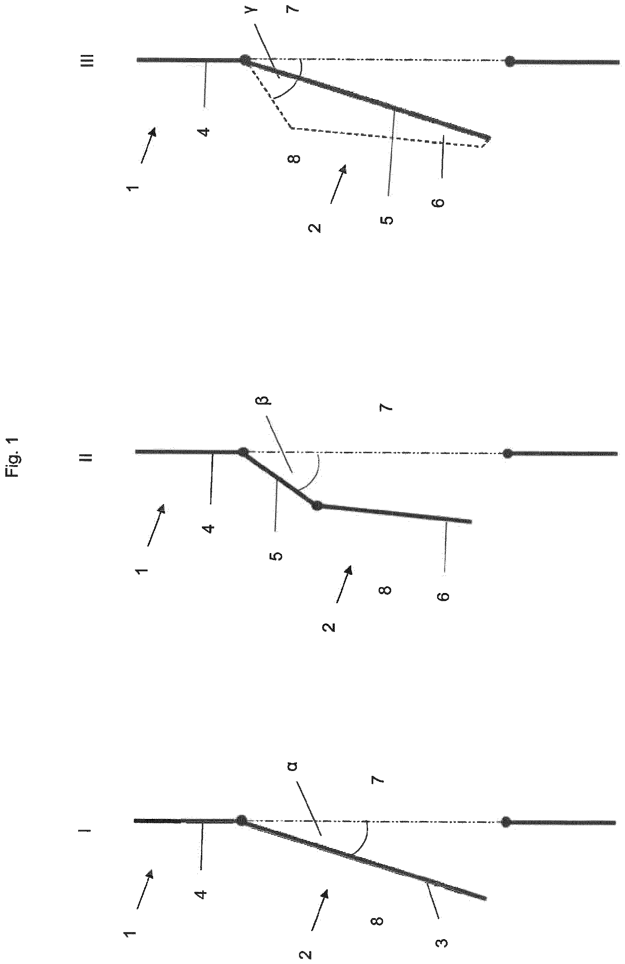

Figur 1 zeigt mit den Abbildungen I bis III drei verschiedene schematische Ausschnitte eines PKW 1. Abbildung I zeigt dabei einen PKW 1 mit einer aus dem Stand der Technik bekannten PKW-Tür 2. Die Abbildungen II und III zeigen jeweils einen PKW 1 mit einer erfindungsgemäßen Ausgestaltung einer PKW-Tür 2. Mit Bezug auf die PKW-Tür 2 ist in den Abbildungen I bis III jeweils stellvertretend die Fahrertür des PKW 1 dargestellt. Selbstverständlich ist die erfindungsgemäße PKW-Tür 2 auch als Beifahrertür und/oder Fondtür verwendbar.

Gemäß Abbildung I weist die PKW-Tür 2 einen einteilig ausgebildeten PKW-Türkörper 3 auf. Der PKW-Türkörper 3 ist mit der Karosserie 4 des PKW 1 schwenkbeweglich verbunden. Der Öffnungswinkel α zwischen Karosserie 4 und PKW-Türkörper 3 ist bei gegebenem maximalem Schwenkweg des PKW-Türkörpers 3 vergleichsweise gering. Dadurch ist insbesondere im Bereich der Schwenkachse zwischen Karosserie 4 und PKW-Türkörper 3 nicht ausreichend Platz vorhanden, um insbesondere die Füße aus dem PKW 1 herauszubewegen.

Stattdessen ist eine unbequeme Bewegung notwendig, um die Füße anschließend im hinteren Bereich der PKW-Tür 2 aus dem PKW 1 herausbewegen zu können.

Abbildung II zeigt eine erste Ausgestaltung der Erfindung, bei der der Türkörper 3 wenigstens zweiteilig ausgebildet ist. Er weist hierzu das erste Außenwandelement 5 und das zweite Außenwandelement 6 auf. Die Außenwandelemente 5, 6 sind schwenkbeweglich miteinander verbunden. Die Schwenkachse zwischen den Außenwandelementen 5, 6 verläuft dabei mit Bezug auf die Einbaulage der PKW-Tür 2 in Höhenrichtung der PKW-Tür 2. Die schwenkbewegliche Verbindung ist in diesem Ausführungsbeispiel derart ausgebildet, dass das zweite Außenwandelement 6 relativ zum ersten Außenwandelement 5 in Richtung des PKW-Innenraums 7 verschwenkbar ist.

In diesem Beispiel ist der Öffnungswinkel β zwischen dem ersten Außenwandelement 5 und der Karosserie 4 im Bereich der Schwenkachse im vorderen Bereich der PKW-Tür 2 größer als der Öffnungswinkel α bei einer konventionellen PKW-Tür 2. Hierdurch können die unteren Extremitäten bequem aus dem PKW 1 herausbewegt werden. Der schwenkbewegliche Verbindungsbereich verläuft vorliegend zwischen dem ersten und dem zweiten Außenwandelement 5, 6 über die gesamte Höhe der PKW-Tür 2. Somit ist ebenfalls genug Platz, um den gesamten Körper bequem aus dem PKW 1 hinauszubewegen.

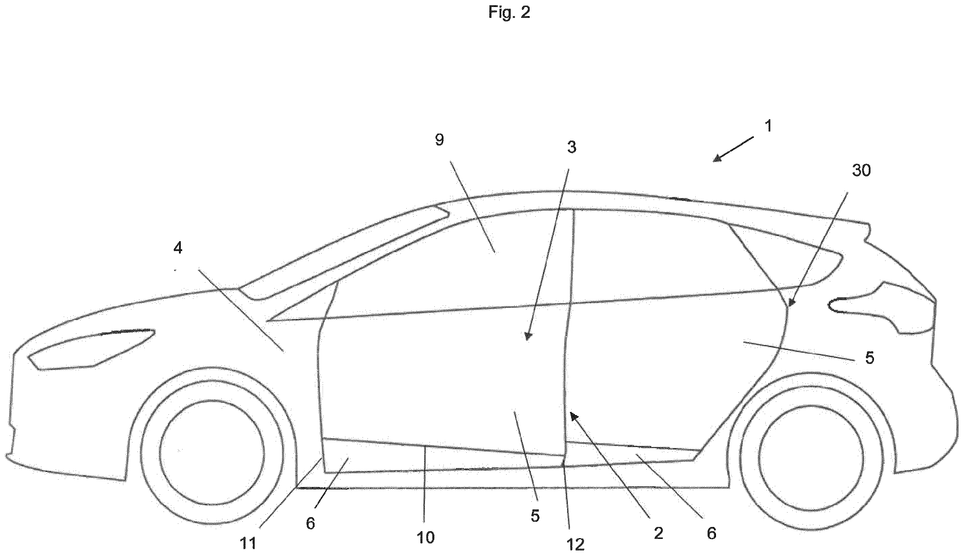

Abbildung III zeigt eine zweite Ausgestaltung der Erfindung, bei der der Türkörper 3 wenigstens zweiteilig ausgebildet ist. Er weist hierzu das erste Außenwandelement 5 und das zweite Außenwandelement 6 auf. Die Außenwandelemente 5, 6 sind schwenkbeweglich miteinander verbunden. Die Schwenkachse zwischen den Außenwandelementen 5, 6 verläuft dabei mit Bezug auf die Einbaulage der PKW-Tür 2 teilweise in Horizontalrichtung und teilweise in Höhenrichtung der PKW-Tür 2 (vgl. Fig. 2). Die schwenkbewegliche Verbindung ist in diesem Ausführungsbeispiel derart ausgebildet, dass das zweite Außenwandelement 6 relativ zum ersten Außenwandelement 5 in Richtung der Außenseite 8 des PKW 1 verschwenkbar ist.

In diesem Beispiel ist der Öffnungswinkel γ zwischen dem zweiten Außenwandelement 6 und der Karosserie 4 im Bereich der Schwenkachse im vorderen Bereich der PKW-Tür 2 größer als der Öffnungswinkel α bei einer konventionellen PKW-Tür 2. Hierdurch können die unteren Extremitäten bequem aus dem PKW 1 herausbewegt werden. Der schwenkbewegliche Verbindungsbereich verläuft vorliegend zwischen dem ersten und dem zweiten Außenwandelement 5, 6 über die gesamte Breite der PKW-Tür 2. Somit ist genug Platz, um nicht nur die Füße, sondern auch die Beine bequem aus dem PKW 1 hinauszubewegen.

Die nachfolgenden Figuren 2 bis 6 zeigen die erfindungsgemäße Ausführungsform gemäß Figur 1, Abbildung III im Detail.

Figur 2 zeigt einen PKW 1 mit einer PKW-Tür 2 in der Ausgestaltung als Fahrertür. Die PKW-Tür 2 befindet sich im geschlossenen Zustand.

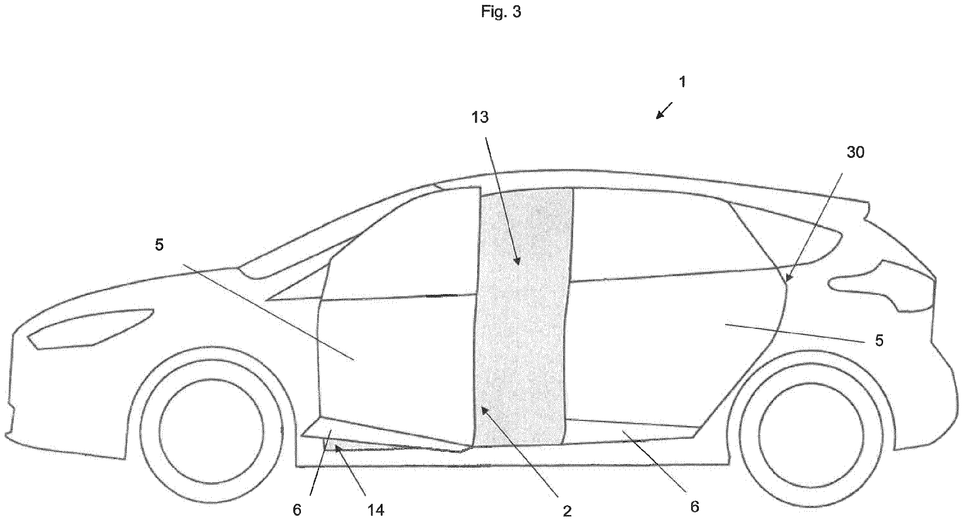

Die PKW-Tür 2 weist einen PKW-Türkörper 3 auf. Der PKW-Türkörper ist vorliegend wenigstens zweiteilig ausgebildet. Er weist hierzu das erste Außenwandelement 5 und das zweite Außenwandelement 6 auf. Dabei ist das erste Außenwandelement 5 in Einbaulage oberhalb des zweiten Außenwandelements 6 angeordnet. Beide Außenwandelemente 5, 6 befinden sich vorliegend in geschlossenem, also unverschwenktem, Zustand. Die Öffnungsbereiche 13, 14 des PKWs 1 (vgl. Figur 3) sind in diesem Zustand vollständig verschlossen.

Die Seitenfläche des ersten Außenwandelements 5 ist größer ausgebildet als die Seitenfläche des zweiten Außenwandelements 6. Vorliegend übersteigt die Größe der Seitenfläche des ersten Außenwandelement 5 die Größe der Seitenfläche des zweiten Außenwandelements 6 um wenigstens das Dreifache.

Die PKW-Tür weist ferner eine Seitenscheibe 9 auf. die Seitenscheibe 9 ist in Einbaulage oberhalb des ersten Außenwandelements 5 angeordnet.

Die Außenwandelemente 5, 6 sind miteinander verschwenkbar verbunden. Die Schwenkachse verläuft dabei parallel zu der langen Kante 10 des zweiten Außenwandelements 6. Vorliegend ist das zweite Außenwandelement 6 trapezförmig ausgebildet. Es verfügt dabei über zwei kurze Grundseiten 11, 12. Die längere der beiden kurzen Grundseiten 11, 12 ist die Basis 11. Hierdurch wird der Öffnungswinkel des zweiten Außenwandelements 6 zwischen den Außenwandelementen 5, 6 im Öffnungsbereich 13 (vgl. Figur 3) im vorderen Abschnitt vergleichsweise stark verändert, wodurch insbesondere die Füße eines Insassen besonders bequem aus dem Innenraum 7 herausbewegt werden können.

Die Außenwandelemente 5, 6 sind über die lange Kante 6 miteinander verbunden, welche vom dem ersten Außenwandelement 5 zugewandten Schenkel des trapezförmigen zweiten Außenwandelements 6 bereitgestellt wird.

Ebenfalls abgebildet ist die fahrerseitige Fondtür 30. Auch diese verfügt im vorliegenden Beispiel über erfindungsgemäße Außenwandelemente 5, 6, welche in zur PKW-Tür 2 analoger Weise ausgestaltet und verschwenkbar miteinander verbunden sind.

Figur 3 zeigt den PKW 1 mit der PKW-Tür 2. Die PKW-Tür 2 befindet sich im geöffneten Zustand. Das zweite Außenwandelement 6 ist vorliegend nach Art einer nach außen klappbaren Klappe ausgebildet. Das zweite Außenwandelement 6 wird vorliegend automatisch verschwenkt, wenn die das erste Außenwandelement 5 verschwenkt wird. Vorliegend ist das erste Außenwandelement 5 mit der Karosserie 4 des PKWs gelenkig verbunden.

Durch Öffnung der PKW-Tür 2 wird in gewohnter Weise ein Öffnungsbereich 13 geöffnet, welcher den Zugang zum Innenraum 7 des PKW 1 ermöglicht. Darüber hinaus wird jedoch durch Verschwenkung des zweiten Außenwandelements 4 ein zusätzlicher Öffnungsbereich 14 geöffnet, durch den die Füße eines Insassen bequem hindurchgeführt werden können.

Vorliegend beträgt der maximale Öffnungswinkel des zweiten Außenwandelements (6) 45°. Dieser maximale Öffnungswinkel wird vorliegend bereits bei einem Öffnungswinkel des ersten Außenwandelements 5 von 20° erreicht.

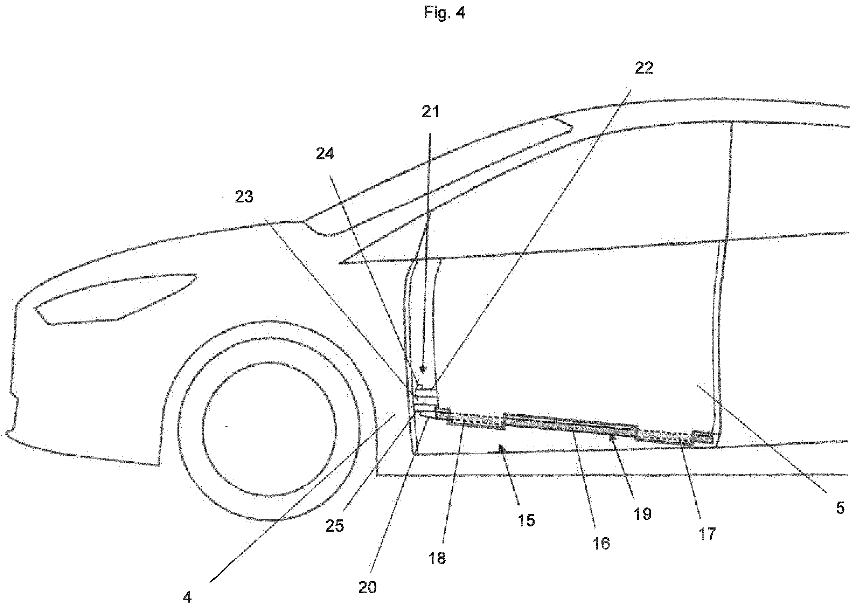

Ebenfalls abgebildet ist die fahrerseitige Fondtür 30. Auch diese verfügt im vorliegenden Beispiel über erfindungsgemäße Außenwandelemente 5, 6, welche in zur PKW-Tür 2 analoger Weise ausgestaltet und verschwenkbar miteinander verbunden sind. Die Fondtür 30 befindet sich vorliegend im unverschwenkten Zustand.Figur 4 zeigt den Schwenkmechanismus der Außenwandelemente 5, 6 am Beispiel der PKW-Tür 2 in der Ausgestaltung als Fahrertür. Das Außenwandelement 6 ist in dieser Darstellung nicht gezeigt. Die Außenwandelemente 5, 6 sind über eine Schwenkeinrichtung 15 miteinander verschwenkbar verbunden. Die Schwenkeinrichtung 15 weist eine Hohlwelle 16 auf.

Das erste Außenwandelement 5 ist in den Befestigungsbereichen 17, 18 an der Schwenkeinrichtung 15 befestigt. Die Hohlwelle 16 ist dabei von dem ersten Außenwandelement 5 berührungslos aufgenommen. Das nicht gezeigte zweite Außenwandelement 6 ist wenigstens in dem zwischen den Bereichen 17, 18 befindlichen Befestigungsbereich 19 an der Hohlwelle 16 befestigt, so dass eine Rotation der Hohlwelle 16 eine Verschwenkung des zweiten Außenwandelements 6 in Richtung der Außenseite 8 der PKW-Tür 2 bewirkt.

Die Schwenkeinrichtung 15 verfügt über ein erstes Getriebeelement 20. Das erste Getriebeelement 20 ist vorliegend als Kegelritzel eines Kegelradgetriebes ausgebildet. Das Getriebeelement 20 ist mit der einendseitig der Hohlwelle 16 mit dieser verbunden. Das Getriebeelement 20 überträgt hierdurch ein Antriebsmoment in Form eines Drehmoments an die Hohlwelle 16.

Das erste Außenwandelement 5 ist über eine Gelenkeinrichtung 21 mit der Karosserie 4 des PKW 1 verschwenkbar verbunden. Die Gelenkeinrichtung 21 weist ein erstes Gelenkelement 22, ein zweites Gelenkelement 23, einen Gelenkstift 24 und ein zweites Getriebeelement 25 auf.

Das erste Gelenkelement 22 ist mit dem ersten Außenwandelement 5 verbunden. Das zweite Gelenkelement 23 ist mit der Karosserie 4 verbunden. Der Gelenkstift 24 ist mit dem ersten Gelenkelement 22 fest verbunden. Er durchgreift eine Ausnehmung des zweiten Gelenkelements 23. Innerhalb der Ausnehmung ist der Gelenkstift 24 drehbar angeordnet.

An dem die Ausnehmung durchgreifenden Ende des Gelenkstiftes 24 ist das zweite Getriebeelement 25 befestigt. Das zweite Getriebeelement 25 ist vorliegend als Kegelrad ausgebildet. Das erste Getriebeelement 20 greift dabei formschlüssig in das zweite Getriebeelement 25 ein. Die Getriebeelemente 20, 25 bilden damit ein Kegelradgetriebe. Hierdurch wird bei einer Verschwenkbewegung des ersten Außenwandelements 5 ein Drehmoment erzeugt, welches über den Gelenkstift 24 und das zweite Getriebeelement 25 an das erste Getriebeelement 20 und die die Hohlwelle 16 übertragen wird, mittels welcher das zweite Außenwandelement 6 angetrieben wird.

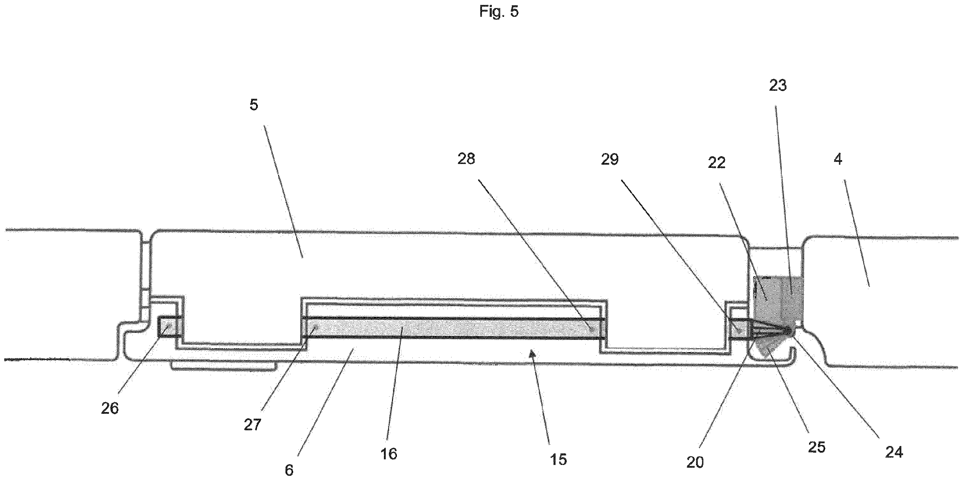

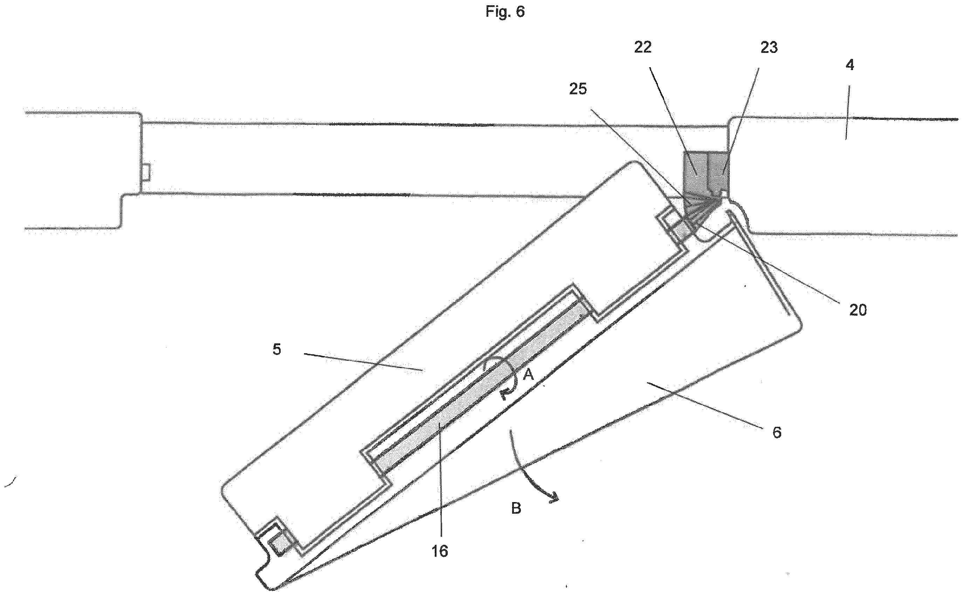

Die Figuren 5 und 6 zeigen diesen Vorgang anhand einer PKW-Tür 2 in der Ausgestaltung als Beifahrertür im Detail. Figur 5 zeigt die PKW-Tür 2 in geschlossenem Zustand. Figur 6 zeigt die PKW-Tür 2 in geöffnetem Zustand. Zu erkennen ist dort insbesondere, dass das zweite Außenwandelement 6 mit der Hohlwelle 16 mittels Schrauben 26, 27, 28, 29 verschraubt ist. Wird nun das erste Außenwandelement 5 aus dem geschlossenen, unverschwenkten Zustand heraus zur Öffnung der PKW-Tür 2 verschwenkt, wird ein Drehmoment vom Gelenkstift 24 auf das teilweise dargestellte Kegelrad 25 und von dort auf das Kegelritzel 20 und von dort auf die Hohlwelle 16 übertragen. Durch die Verschraubung von Hohlwelle 16 und zweitem Außenwandelement 6 bewirkt die Rotation A der Hohlwelle 16 eine nach außen gerichtete Verschwenkbewegung B des zweiten Außenwandelements 6.

Wird das erste Außenwandelement 5 aus dem geöffneten, verschwenkten Zustand heraus zum Schließen der PKW-Tür 2 zurückverschwenkt, läuft obiger Vorgang umgekehrt ab. Dabei wird das zweite Außenwandelement 6 ebenfalls aus seiner verschwenkten Stellung heraus in den unverschwenkten Zustand zurückbewegt.

Durch obigen Mechanismus wird eine einfache technische Lösung bereitgestellt, um Autofahrern den Aus- und Einstieg, insbesondere bei in kurzem Abstand zueinander geparkten Autos in Parkbuchten, zu erleichtern.

### Bezugszeichenliste

- 1: Personenkraftwagen (PKW)
- 2: PKW-Tür
- 3: PKW-Türkörper
- 4: Karosserie
- 5: erstes Außenwandelement
- 6: zweites Außenwandelement
- 7: Innenraum
- 8: Außenseite
- 9: Seitenscheibe
- 10: lange Kante
- 11: Basis
- 12: Grundseite
- 13: Öffnungsbereich
- 14: zusätzlicher Öffnungsbereich
- 15: Schwenkeinrichtung
- 16: Hohlwelle
- 17: Befestigungsbereich
- 18: Befestigungsbereich
- 19: Befestigungsbereich
- 20: Getriebeelement
- 21: Gelenkeinrichtung
- 22: Gelenkelement
- 23: Gelenkelement
- 24: Gelenkstift
- 25: Getriebeelement
- 26: Schraube
- 27: Schraube
- 28: Schraube
- 29: Schraube
- 30: Fondtür

- A: Rotation
- B: Verschwenkbewegung

- α: Winkel
- β: Winkel
- γ: Winkel

## Patentansprüche

1. Fahrzeugtür für ein Fahrzeug (1), insbesondere für Personenkraftwagen und/oder Lastkraftwagen, aufweisend einen Türkörper (3) mit einer Außenwand und einer Innenwand, wobei der Türkörper (3) mit der Karosserie (4) des Fahrzeugs schwenkbeweglich verbindbar ist, wobei die Außenwand ein erstes Außenwandelement (5) und ein zweites Außenwandelement (6) aufweist, welche schwenkbeweglich miteinander verbunden sind, wobei das erste Außenwandelement (5) in Einbaulage oberhalb des zweiten Außenwandelements (6) angeordnet ist, und aufweisend eine Schwenkeinrichtung (15), welche das erste Außenwandelement (5) und das zweite Außenwandelement (6) schwenkbeweglich miteinander verbindet, **dadurch gekennzeichnet, dass** die Schwenkeinrichtung (15) ein erstes Getriebeelement (20) aufweist, welches als Kegelritzel ausgebildet ist und mit einem korrespondierenden zweiten Getriebeelement (25) des Fahrzeugs (1) welches als Kegelrad ausgebildet ist derart in Wirkverbindung bringbar ist, dass eine Verschwenkung des Türkörpers (3) in Richtung der Außenseite (7) der Fahrzeugtür (2) relativ zur Karosserie (4) eine Verschwenkung des zweiten Außenwandelements (6) in Richtung der Außenseite (7) der Fahrzeugtür (2) relativ zum ersten Außenwandelement (5) bewirkt.

2. Fahrzeugtür nach Anspruch 1, **dadurch gekennzeichnet, dass** die Schwenkachse zwischen den beiden Außenwandelementen (5, 6) entlang einer dem ersten Außenwandelement (5) zugewandten langen Kante (10) des zweiten Außenwandelements (6) verläuft.

3. Fahrzeugtür nach einem der Ansprüche 1 oder 2, **dadurch gekennzeichnet, dass** die Schwenkeinrichtung (15) eine mit dem ersten Getriebeelement (20) verbundene Welle (16) aufweist.

4. Fahrzeug, insbesondere ein Personenkraftwagen und/oder ein Lastkraftwagen, mit einer Karosserie (4) und einer Fahrzeugtür (2) nach einem der Ansprüche 1 bis 3 wobei der Türkörper (3) und die Karosserie (4) über eine Gelenkeinrichtung (21) schwenkbeweglich miteinander verbunden sind, und wobei die Gelenkeinrichtung (21) ein zweites Getriebeelement (25) aufweist, **dadurch**
**gekennzeichnet, dass** die Getriebeelemente (20, 25) derart miteinander in Wirkverbindung stehen, dass eine Verschwenkung des Türkörpers (3) in Richtung der Außenseite (7) der Fahrzeugtür (2) relativ zur Karosserie (4) eine Verschwenkung des zweiten Außenwandelements (6) in Richtung der Außenseite (7) der Fahrzeugtür (2) relativ zum ersten Außenwandelement (5) bewirkt.

## Claims

1. Vehicle door for a vehicle (1), in particular for a passenger vehicle and/or truck, comprising a door body (3) having an outer and an inner wall, wherein said door body (3) is pivotably connectable to the vehicle body (4) of the vehicle, wherein the outer wall comprises a first outer wall element (5) and a second outer wall element (6), which are pivotably connected to each other, wherein the first outer wall element (5) is arranged above the second outer wall element (6) in the installation position, and comprising a pivoting device (15) pivotably connecting the first outer wall element (5) and the second outer wall element (6), **characterized in that** the pivoting device (15) comprises a first gear element (20), which is designed as a bevel pinion, and a corresponding second gear element (25) of the vehicle (1), which is designed as a bevel pinion and can be brought into operative connection in such a way that a pivoting of the door body (3) in the direction of the outer side (7) of the vehicle door (2) relative to the body (4) causes a pivoting of the second outer wall element (6) in the direction of the outer side (7) of the vehicle door (2) relative to the first outer wall element (5).

2. Vehicle door according to claim 1, **characterized in that** the pivot axis between the two outer wall elements (5 6) runs along a long edge (10) of the second outer wall element (6) facing the first outer wall element (5).

3. Vehicle door according to any of claims 1 or 2, **characterized in that** the pivoting device (15) comprises a shaft (16) connected to the first gear element (20).

4. Vehicle, in particular passenger vehicle and/or truck, comprising a vehicle body (4) and a vehicle door (2) according to one of the claims 1 to 3, wherein the door body (3) and the vehicle body (4) are pivotably connected to each other through an articulation device (21) and wherein said articulation device (21) comprises a second gear element (25), **characterized in that** the gear elements (20, 25) are operatively connected to each other in such a way that a pivoting of the door body (3) in the direction of the outer side (7) of the vehicle door (2) relative to the vehicle body (4) causes a pivoting of the second outer wall element (6) in the direction of the outer side (7) of the vehicle door (2) relative to the first outer wall element (5).

## Revendications

1. Porte de véhicule pour un véhicule (1), en particulier pour un véhicule de tourisme et/ou camion, comprenant un corps de porte (3) avec une paroi extérieure et une paroi intérieure, le corps de porte (3) pouvant être relié de manière pivotante à la carrosserie (4) du véhicule, la paroi extérieure comprenant un premier élément de paroi extérieure (5) et un deuxième élément de paroi extérieure (6), qui sont reliés entre eux de manière pivotante, le premier élément de paroi extérieure (5) étant disposé au-dessus du deuxième élément de paroi extérieure (6) dans la position de montage, et comprenant un dispositif de pivotement (15) reliant de manière pivotante le premier élément de paroi extérieure (5) et le deuxième élément de paroi extérieure (6), **caractérisé en ce que** le dispositif de pivotement (15) comprend un premier élément d'engrenage (20), qui est réalisé sous la forme d'un pignon conique, et un deuxième élément d'engrenage correspondant (25) du véhicule (1), qui est réalisé sous la forme d'un pignon conique et qui peut être mis en liaison active de telle sorte qu'un pivotement du corps de porte (3) en direction du côté extérieur (7) de la porte de véhicule (2) par rapport au corps (4) provoque un pivotement du deuxième élément de paroi extérieure (6) en direction du côté extérieur (7) de la porte de véhicule (2) par rapport au premier élément de paroi extérieure (5).

2. Porte de véhicule selon la revendication 1, **caractérisée en ce que** l'axe de pivotement entre les deux éléments de paroi extérieure (5, 6) s'étend le long d'un bord long (10) du deuxième élément de paroi extérieure (6) tourné vers le premier élément de paroi extérieure (5).

3. Porte de véhicule selon l'une quelconque des revendications 1 ou 2, **caractérisée en ce que** le dispositif de pivotement (15) comprend un arbre (16) relié au premier élément d'engrenage (20).

4. Véhicule, en particulier véhicule de tourisme et/ou camion, comprenant une carrosserie de véhicule (4) et une porte de véhicule (2) selon l'une des revendications 1 à 3, dans lequel le corps de porte (3) et la carrosserie de véhicule (4) sont reliés entre eux de manière pivotante par un dispositif d'articulation (21) et dans lequel ledit dispositif d'articulation (21) comprend un deuxième élément d'engrenage (25), **caractérisé en ce que** les éléments d'engrenage (20, 25) sont connectés de manière opérationnelle l'un à l'autre de telle sorte qu'un pivotement du corps de porte (3) dans la direction du côté extérieur (7) de la porte de véhicule (2) par rapport au corps de véhicule (4) provoque un pivotement du second élément de paroi extérieure (6) dans la direction du côté extérieur (7) de la porte de véhicule (2) par rapport au premier élément de paroi extérieure (5).
